# EUROPÄISCHE PATENTSCHRIFT

(11) **EP 0 830 261 B1**
(45) Veröffentlichungstag und Bekanntmachung des Hinweises auf die Patenterteilung: **03.07.2002**
(21) Anmeldenummer: 96929229.1
(22) Anmeldetag: 09.08.1996
(51) Int. Cl.: B60D 1/52

(54) **ANHÄNGEVORRICHTUNG**
TOWING DEVICE
DISPOSITIF D'ATTELAGE

(30) Priorität: 04.04.1996 DE 19613428
(43) Veröffentlichungstag der Anmeldung: 25.03.1998
(73) Patentinhaber: ORIS FAHRZEUGTEILE HANS RIEHLE GmbH, 71696 Möglingen (DE)
(72) Erfinder: RIEHLE, Jörg, D-70439 Stuttgart (DE); BLANK, Hans, D-71696 Möglingen (DE); HOHL, Wolfgang, D-71665 Vaihingen (DE); SCHIMKO, Frank, D-74354 Besigheim (DE)
(74) Vertreter: Beck, Jürgen, Dr. Dipl.-Phys.
(86) Internationale Anmeldenummer: EP9603529
(87) Internationale Veröffentlichungsnummer: WO9737862

(56) Entgegenhaltungen:
- DE-A- 2 935 474
- DE-A- 3 601 505
- DE-A- 4 244 100
- DE-A- 4 312 208
- DE-U- 29 501 733
- US-A- 4 201 400

## Beschreibung

Die Erfindung betrifft eine Anhängevorrichtung für Fahrzeuge, insbesondere für Personenkraftwagen, umfassend ein am Heck des Fahrzeugs fest angeordnetes Aufnahmeteil, einen mit einem Verankerungsteil lösbar am Aufnahmeteil fixierbaren Kugelhals, welcher an einem dem Verankerungsteil gegenüberliegenden Ende eine Kupplungskugel trägt, am Aufnahmeteil und am Verankerungsteil angeordnete, quer zu einer Einführrichtung wirksame und in der Einführrichtung wirksame Formschlußelemente, durch welche das Verankerungsteil zum Fixieren desselben in einer definierten Relativposition zum Aufnahmeteil positionierbar ist, und am Aufnahmeteil und am Verankerungsteil angeordnete Verriegelungselemente, von denen eines ein in einer quer zur Einführrichtung verlaufenden Verriegelungsrichtung bewegbarer Verriegelungskörper aufweist, der im Verriegelungszustand in Verriegelungsrichtung mit einer elastischen Kraft beaufschlagt ist und das andere ein Gegenlager für diesen ist welches eine schräg zur Verriegelungsrichtung verlaufende Fläche aufweist, auf welcher im Verriegelungszustand der mit der elastischen Kraft beaufschlagte Verriegelungskörper einseitig anliegt, so daß die Verriegelungselemente eine quer zur Verriegelungsrichtung weisende Kraftkomponente erzeugen, und welche bei in der definierten Relativposition stehendem Verankerungsteil eine Bewegung desselben entgegengesetzt zur Einführrichtung aus dem Aufnahmeteil heraus blockieren.

Eine derartige Anhängevorrichtung ist aus der DE-A1-43 12 208 bekannt. Bei dieser Anhängevorrichtung sichert ein als Kugel ausgebildeter Verriegelungskörper das Verankerungsteil durch den Eingriff eine Aufnahme, wobei die Position der Aufnahme relativ zu den Formschlußelementen so gewählt ist, daß die Formschlußelemente in Einführrichtung aneinander anliegen.

Um im Verriegelungszustand ein möglichst geringes Spiel zwischen Aufnahmeteil und Verriegelungsteil zu erhalten, ist eine äußerst exakte Positionierung der die Verankerungskörper zentrierend positionierenden Aufnahmen relativ zu den Formschlußelementen, insbesondere zu den zweiten Formschlußelementen erforderlich.

Darüber hinaus wird das Spiel zwischen diesen im Laufe der Benutzung der Anhängevorrichtung, insbesondere durch die Belastung der Formschlußelemente bei Belastung des Kugelhalses mit der Zugkraft sich vergrößern, so daß zumindest im Laufe der Benutzung der erfindungsgemäßen Anhängevorrichtung sich im Verriegelungszustand ein Spiel zwischen Verankerungsteil und Aufnahmeteil einstellen wird.

Aus der DE-A1-36 01 505 ist eine Anhängekupplung mit einem in Einführrichtung wirksamen federbelasteten Konusring bekannt.

Der Erfindung liegt daher die Aufgabe zugrunde, eine Anhängevorrichtung der gattungsgemäßen Art derart zu verbessern, daß das Spiel zwischen dem Aufnahmeteil und dem Verankerungsteil möglichst gering ist.

Diese Aufgabe wird bei einer Anhängevorrichtung der eingangs beschriebenen Art erfindungsgemäß dadurch gelöst, daß die schräg zur Verriegelungsrichtung verlaufende Fläche des Gegenlagers so verläuft, daß die quer zur Verriegelungsrichtung weisende Kraftkomponente quer zur Einführrichtung weist und damit die Formschlußelemente spielfrei in Anlage hält.

Der Vorteil der erfindungsgemäßen Lösung ist darin zu sehen, daß bei dieser die Verriegelungselemente nicht nur die Aufgabe haben, ein Lösen des Verankerungsteils zu blockieren, sondern gleichzeitig die Formschlußelemente im wesentlichen spielfrei aneinander in Anlage zu halten.

Erfindungsgemäß ist es dadurch, daß die quer zur Verriegelungsrichtung weisende Kraftkomponente quer zur Einführrichtung weist, möglich, die eine Drehung des Verankerungsteils im Aufnahmeteil verhindernden Formschlußelemente spielfrei aneinander zur Anlage zu bringen.

Sind diese eine Drehung verhindernden Formschlußelemente so ausgebildet, daß eine Drehung gleichzeitig eine Bewegung des Verankerungsteils entgegengesetzt zur Einführrichtung bewirkt, so ist mit dieser Kraftkomponente gleichzeitig auch noch die Möglichkeit einer spielfreien Positionierung in Einführrichtung gegeben.

Ein besonders zweckmäßiges Ausführungsbeispiel sieht vor, daß sowohl eine in Einführrichtung weisende als auch eine quer zur Einführrichtung weisende Kraftkomponente von den Verriegelungselementen erzeugt werden.

Bei einem Ausführungsbeispiel, bei welchem eine Drehbewegung des Verankerungsteils relativ zum Aufnahmeteil möglich, jedoch durch die Formschlußelemente blockiert ist, ist vorzugsweise vorgesehen, daß die quer zur Einführrichtung weisende Kraftkomponente bezüglich einer Längsachse des Verankerungsteils ein Drehmoment erzeugt, welches dann dafür sorgt, daß die entsprechenden Formschlußelemente spielfrei aneinander zur Anlage bringbar sind.

Selbst bei einer Vergrößerung des Spiels im laufe des Einsatzes der erfindungsgemäßen Anhängevorrichtung halten die Verriegelungselemente bei der erfindungsgemäßen Lösung die Formschlußelemente weiter spielfrei, da der Verriegelungskörper mit einer elastischen Kraft beaufschlagt ist und somit selbständig nachstellend wirkt und somit die quer zur Verriegelungsrichtung weisende Kraftkomponente unabhängig von dem sich vergrößernden Spiel aufrechterhalten wird.

Die Formschlußelemente können in unterschiedlichster Art und Weise ausgebildet sein. So wäre es beispielsweise denkbar, die Formschlußelemente als hakenähnlich miteinander in Eingriff bringbare Elemente, wie beispielsweise in der EP 0 492 035 offenbart, auszubilden. Insbesondere bei einem ein als Schaft ausgebildeten Verankerungsteil und einem hülsenähnlich aufnehmenden Aufnahmeteil sind die Formschlußelemente als eine Verdrehung des Schafts in dem Aufnahmeteil hindernde Formschlußelemente ausgebildet.

Die Formschlußelemente können dabei beispielsweise als parallel zur Einführrichtung verlaufende Planflächen geformt sein. Es ist aber auch möglich, diese als einerseits sich schräg und sich andererseits quer zur Einführrichtung erstreckende Flächen auszubilden.

Hinsichtlich der Funktion der Formschlußelemente ist zweckmäßigerweise vorgesehen, daß die sich quer zur Einführrichtung erstreckenden Flächen in Einführrichtung einen Anschlag bilden.

Hinsichtlich der Ausrichtung der Kraftkomponenten quer zur Verriegelungsrichtung wurden im Zusammenhang mit der bisherigen Beschreibung der einzelnen Ausführungsbeispiele keine näheren Angaben gemacht. So sieht ein vorteilhaftes Ausführungsbeispiel vor, daß die quer zur Verriegelungsrichtung weisende Kraftkomponente in Einführrichtung weist. Damit ist auf alle Fälle sichergestellt, daß damit die in Einführrichtung wirksamen Formschlußelemente spielfrei aneinander in Anlage gehalten werden.

Sind die Formschlußelemente dabei gleichzeitig als schräg zur Einführrichtung verlaufende Flächen ausgebildet, so ist dabei auch möglich, eine spielfreie Fixierung quer zur Einführrichtung zu erhalten.

Hinsichtlich der Ausbildung des Gegenlagers wurden im Zusammenhang mit der bisherigen Erläuterung der einzelnen Ausführungsbeispiele keine näheren Angaben gemacht. So sieht ein vorteilhaftes Ausführungsbeispiel vor, daß das Gegenlager eine Aufnahme für das Verriegelungselement ist.

Eine derartige Aufnahme hat den Vorteil, daß damit die Möglichkeit geschaffen ist, in einfacher Weise das Verankerungsteil in das Aufnahmeteil einführbar zu gestalten, ohne durch das Gegenlager dieses Einführen zu erschweren oder durch das Vorsehen des Gegenlagers eine komplizierte Form des Verankerungsteils und/oder des Aufnahmeteils zu bedingen.

Die Aufnahme läßt sich fertigungstechnisch besonders dann günstig herstellen, wenn diese eine zu einer Mittelachse derselben symmetrische Aufnahmefläche aufweist, in welcher der Verriegelungskörper nur in einem auf einer Seite der Mittelachse liegenden Flächenbereich anliegt.

Dieses einseitige Anliegen des Verriegelungskörpers an der Aufnahmefläche ist insbesondere dann erreichbar, wenn im Verriegelungszustand eine parallel zur Verriegelungsrichtung verlaufende Mittelachse des Verriegelungskörpers seitlich neben der Mittelachse der Aufnahme verläuft.

Ein besonders vorteilhaftes Ausführungsbeispiel, insbesondere hinsichtlich der Herstellung, sieht vor, daß die Aufnahmefläche rotationssymmetrisch zur Mittelachse der Aufnahme verläuft. In diesem Fall läßt sich die Aufnahmefläche beispielsweise als Kegelfläche, Paraboloidfläche oder Kugelkappenfläche ausbilden, welche alle durch ein rotierendes Werkzeug besonders einfach herstellbar sind.

Hinsichtlich der Ausbildung des Verriegelungskörpers wurden im Zusammenhang mit der bisherigen Erläuterung der einzelnen Ausführungsbeispiele keine näheren Angaben gemacht. So sieht ein vorteilhaftes Ausführungsbeispiel vor, daß der Verriegelungskörper eine Kugel ist, da eine Kugel sich in besonders einfacher Weise in Verriegelungsrichtung und entgegengesetzt hierzu bewegen läßt.

Im Fall einer Kugel liegen die erfindungsgemaßen Verhältnisse insbesondere dann vor, wenn dem Verriegelungszustand ein Mittelpunkt der Kugel neben der Mittelachse der Aufnahme liegt.

Im Falle einer Kugelpfanne als Aufnahme ist vorzugsweise vorgesehen, daß die Kugelpfanne einen Krümmungsradius aufweist, welcher größer als ein Radius der Kugel ist. Damit lassen sich in besonders einfacher Weise die erfindungsgemäßen Verhältnisse dann erreichen, wenn die Kugel auf einer Seite der Mittelachse in einem Flächenbereich der Kugelpfanne aufliegt. In diesem Fall liegt insbesondere ein den Krümmungsradius der Kugelpfanne definierender Mittelpunkt im Verriegelungszustand neben einem Mittelpunkt der Kugel, so daß diese Mittelpunkte nicht - wie beispielsweise bei der DE-C-29 35 474 - zusammenfallen.

Im Zusammenhang mit den bislang beschriebenen Ausführungsbeispielen wurde nicht im einzelnen erläutert, wie der Verriegelungskörper mit einer elastischen Kraft beaufschlagt werden soll. So sieht ein vorteilhaftes Ausführungsbeispiel vor, daß der Verriegelungskörper durch einen in dem Verankerungsteil federbeaufschlagten Verriegelungsbolzen mit der elastischen Kraft beaufschlagt ist.

Dieser Verriegelungsbolzen könnte unmittelbar in seiner Bewegungsrichtung auf den Verriegelungskörper wirken. Eine besonders günstige Kraftübersetzung ist jedoch dadurch erhältlich, daß im Verriegelungszustand der Verriegelungsbolzen mit einem konischen Abschnitt auf den Verriegelungskörper wirkt.

Um ferner sicherzustellen, daß bei übermäßiger Belastung der Kupplung der Verriegelungskörper nicht derart auf den Verriegelungsbolzen wirkt, daß dieser entgegengesetzt zur Kraftwirkung der diesen beaufschlagenden Feder so weit ausweicht, daß der Verriegelungskörper die Möglichkeit hat, mit dem Gegenlager außer Eingriff zu kommen, ist vorzugsweise vorgesehen, daß sich an den konischen, den Verriegelungskörper im Verriegelungszustand beaufschlagenden Abschnitt ein zylindrischer Abschnitt des Verriegelungsbolzens anschließt, welcher so dimensioniert ist, daß bei Anlage an diesem der Verriegelungskörper noch mit dem Gegenlager in Eingriff ist. Eine Einwirkung des Verriegelungskörpers auf den zylindrischen Abschnitt bewirkt nunmehr keine weitere Verschiebung des Verriegelungsbolzens entgegengesetzt zur Kraftwirkung der Feder, so daß damit ein selbsttätiges Freigeben des Verankerungsteils im Aufnahmeteil verhindert wird. Nur im Falle einer manuellen Betätigung des Verriegelungsbolzen entgegen der Kraftwirkung der Feder, welche den Verriegelungsbolzen so weit verschiebt, daß der Verriegelungskörper jenseits des zylindrischen Abschnitts, beispielsweise an einem kegelförmigen Endabschnitt des Verriegelungsbolzens zu Anlage kommt, wird eine Bewegung des Verriegelungskörpers ermöglichen, mit welcher dieser vollständig mit dem Gegenlager außer Eingriff kommt.

Im Rahmen der bislang erläuterten Ausführungsbeispiele wurde nicht näher darauf eingegangen, wie ein besonders günstiges Einführen des Verankerungsteils in das Aufnahmeteil erfolgen kann, ohne daß der Verriegelungskörper hierbei hinderlich ist und das Einführen stört, andererseits aber sichergestellt ist, daß der Verriegelungskörper bei aneinander anliegenden Formschlußelementen in seine Verriegelungsstellung übergeht.

Ein besonders bevorzugtes Ausführungsbeispiel der erfindungsgemäßen Lösung sieht dabei vor, daß eine Auslösevorrichtung eine Beaufschlagung des Verriegelungskörpers mit der federelastischen Kraft blockiert und die Wirkung der federelastischen Kraft auf den Verriegelungskörper dann freigibt, wenn die Formschlußelemente im wesentlichen aneinander anliegen.

Hinsichtlich der Auslösevorrichtung sind die unterschiedlichsten Realisierungsmöglichkeiten denkbar. Eine besonders einfach gestaltete Auslösevorrichtung umfaßt ein Sperrelement, welches über einen Vorsprung des Aufnahmeteils betätigbar ist, wobei der Vorsprung so plaziert ist, daß er das Sperrelement dann in eine entsperrende Stellung überführt, wenn die Formschlußelemente im wesentlichen aneinander anliegen.

Prinzipiell wäre es möglich, über den Vorsprung das Sperrelement direkt zu betätigen. Besonders vorteilhaft ist es jedoch, wenn das Sperrelement über ein Abtastelement der Auslösevorrichtung betätigbar ist, wobei das Abtastelement den Vorsprung im Aufnahmeteil abtastet.

Die Auslösevorrichtung kann prinzipiell unmittelbar auf den Verriegelungskörper oder auch auf die die elastische Kraft erzeugende Feder wirken. Besonders vorteilhaft ist es jedoch, wenn die Auslösevorrichtung auf den Verriegelungsbolzen wirkt, da sie sich in diesem besonders günstig anordnen läßt.

So sieht eine besonders günstige Lösung vor, daß das Sperrelement in Richtung des Tastelements bewegbar und in Richtung desselben federbeaufschlagt im Verriegelungsbolzen angeordnet ist und das Tastelement in Richtung des Sperrelements und in Richtung des Vorsprungs im Aufnahmeteil bewegbar im Verankerungsteil angeordnet ist und daß das Sperrelement im sperrenden Zustand in einen Führungskanal des Tastelements eingreift und bei von dem Vorsprung im Aufnahmeteil beaufschlagtem Tastelement von diesem aus dem Führungskanal desselben verdrängt und in seine entsperrende Stellung überführt wird.

Ein besonders vorteilhaftes Ausführungsbeispiel der erfindungsgemäßen Anhängevorrichtung für die Anordnung insbesondere an Personenkraftwagen sieht vor, daß diese aus einem am Heck des Fahrzeugs festen Aufnahmeteil und aus einem mit einer Kupplungskugel versehenen Kugelhals besteht, der in das Aufnahmeteil einsetzbar ist, derart, daß bei dem Einsetzvorgang, ausgelöst durch ein Auslöseglied oder eine Auslösevorrichtung, ein in dem Kugelhals angeordneter Verriegelungsbolzen durch Federkraft mit einer Kugel eine lösbare Verriegelung zwischen dem Kugelhals und dem Aufnahmeteil herstellt, wobei die zum Verriegeln dienende einzige Kugel in einer Querbohrung durch den Kugelhals liegend im Verriegelungszustand mit ihrer Mitte außermittig zur Mitte der Kugelpfanne im Aufnahmeteil liegt.

Wie bereits eingangs beschrieben, wird durch dieses außermittige Anordnen von Kugel und Kugelpfanne eine quer zur Verriegelungsrichtung gerichtete Kraftkomponente erzeugt, wobei dies mit einer einzigen Kugel möglich ist.

Dem steht allerdings nicht entgegen, daß die erfindungsgemäße Lösung auch mit mehreren Kugeln arbeitet, wie dies aus dem Stand der Technik bekannt ist, wobei in diesem Fall eine hohe Präzision bei der Fertigung der erfindungsgemäßen Anhängevorrichtung erforderlich ist, da bei der Beaufschlagung mehrerer Kugeln durch einen Verriegelungsbolzen in der Regel nur eine Kugel mit der entsprechenden Pfanne die erfindungsgemäße Kraftkomponente erzeugt, während die anderen Kugeln mehr oder weniger wirkungslos sind. Nur bei höchster Präzision ist eine gleichzeitige erfindungsgemäße Wirkung jeder Kugel auch bei Verwendung mehrerer Kugeln erhältlich.

Ferner sieht eine zweckmäßige Fortbildung dieser Lösung vor, daß die Mitte der Kugel unterhalb der Mitte der Kugelpfanne liegt.

Eine weitere günstige Fortbildung sieht vor, daß die Mitte der Kugel in Fahrzeuglängsrichtung außerhalb der Querachse des Aufnahmeteils liegt.

Ein besonders günstiges Ausführungsbeispiel der erfindungsgemäßen Lösung sieht hinsichtlich des Auslöseglieds oder der Auslösevorrichtung vor, daß diese aus zwei unterschiedlich großen Kugeln besteht, von denen die kleinere Kugel federbelastet in einer Querbohrung im Verriegelungsbolzen und teilweise in einer Querbohrung im Kugelhals liegt und die zweite größere Kugel in einer Querbohrung des Verankerungsteils liegt und teilweise aus dieser zum Anschlagen an dem Vorsprung oder der Schrägfläche am Aufnahmeteil herausragt.

Schließlich ist bei einer besonderen Ausbildung der erfindungsgemäßen Lösung vorgesehen, daß am Aufnahmeteil und am Kugelhals, insbesondere am Verankerungsteil desselben, Aufnahmeschrägen angeordnet sind, die in Verbindung mit parallel zur Mittellängsachse angeordneten Flächen ein Verdrehen des Kugelhalses im Aufnahmeteil verhindern.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine teilweise geschnittene Seitenansicht eines ersten Ausführungsbeispiels einer erfindungsgemäßen Anhängevorrichtung;
- Fig. 2: einen vergrößerten Schnitt im Bereich eines Aufnahmeteils und eines Verankerungsteils des ersten Ausführungsbeispiels beim Einführen des Verankerungsteils in das Aufnahmeteil;
- Fig. 3: einen Schnitt ähnlich Fig. 2 bei in das Aufnahmeteil eingeführtem Verankerungsteil in Verriegelungsstellung;
- Fig. 4: einen Schnitt längs Linie 4-4 in Fig. 3 bei aufgrund einer übermäßigen Belastung aus der Verriegelungsstellung herausgedrückter, jedoch nach wie vor ein Herausführen des Verankerungsteils aus dem Aufnahmeteil sperrendem Verriegelungselement;
- Fig. 5: einen Schnitt ähnlich Fig. 2 bei in Entriegelungsstellung stehendem Verriegelungselement und sperrender Auslösevorrichtung;
- Fig. 6: einen Längsschnitt durch ein Aufnahmeteil mit eingesetztem, jedoch noch nicht verriegeltem Kugelhals bei einem zweiten Ausführungsbeispiel einer erfindungsgemäßen Anhängevorrichtung;
- Fig. 7: einen Längsschnitt durch ein Aufnahmeteil nach Fig. 6 des zweiten Ausführungsbeispiels mit eingesetztem und verriegeltem Kugelhals;
- Fig. 8: einen Längsschnitt durch einen unteren Bereich des Aufnahmeteils des zweiten Ausführungsbeispiels mit angesetztem Kugelhals und
- Fig. 9: einen Querschnitt durch den Kugelhals in Höhe der zur Verriegelung dienenden Kugel bei dem zweiten Ausführungsbeispiel.

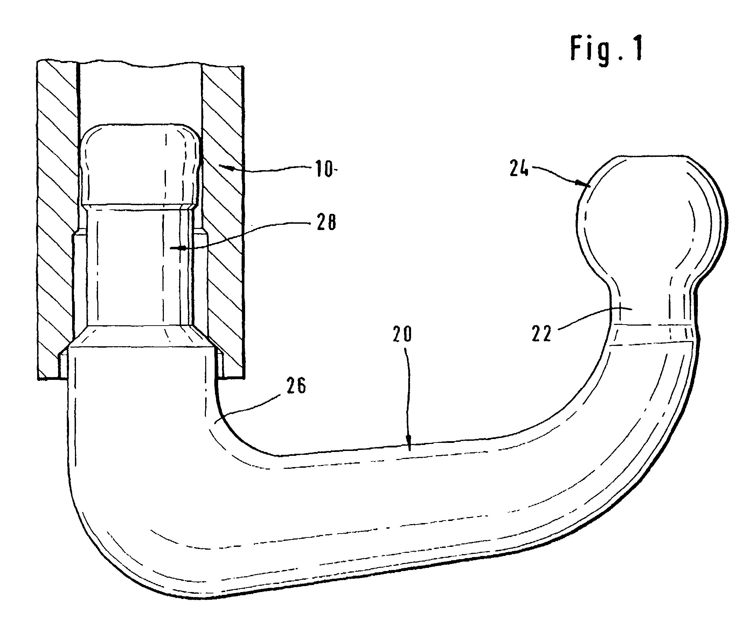

Ein erstes Ausführungsbeispiel einer erfindungsgemäßen Anhängevorrichtung, dargestellt in Fig. 1, umfaßt ein fest an einem Fahrzeug angeordnetes Aufnahmeteil 10, an welchem ein als Ganzes mit 20 bezeichneter Kupplungshals, welcher an einem ersten Ende 22 eine Kupplungskugel 24 und an einem zweiten Ende 26 einen ein Verankerungsteil bildenden Schaft 28 trägt, lösbar fixierbar ist. Dabei ist der Schaft 28 in das Aufnahmeteil 10 einführbar und in diesem fixierbar.

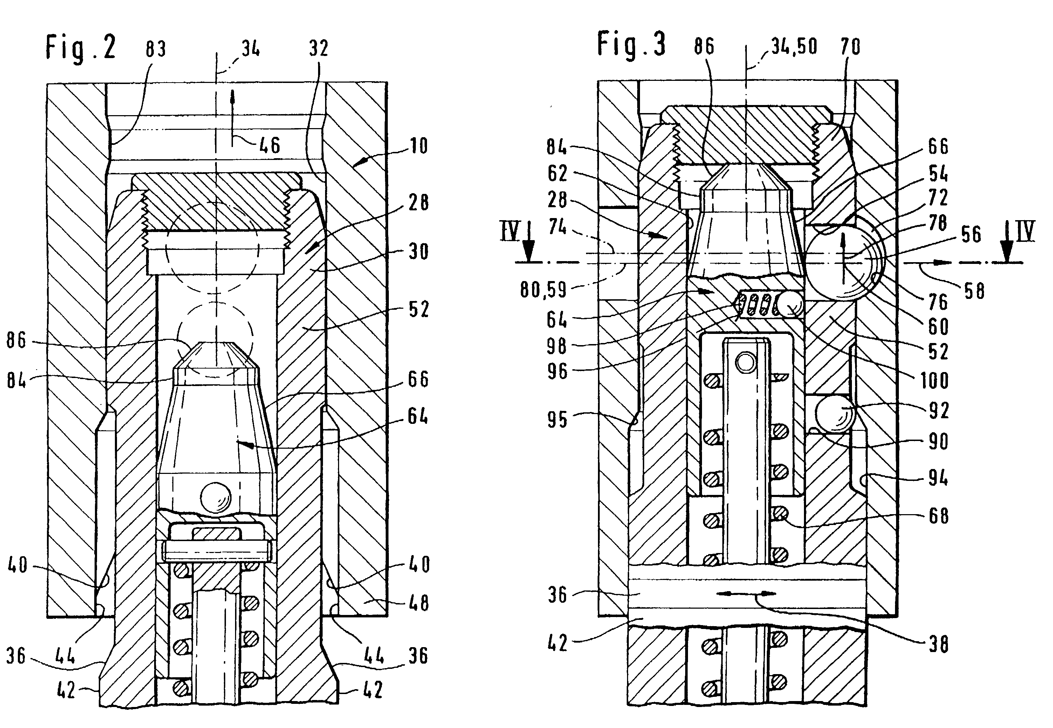

Wie vergrößert in Fig. 2 und Fig. 3 dargestellt, ist der Schaft 28 in einem den Kugelhals 20 abgewandten Endbereich 30 ballig ausgebildet und zur Fixierung in dem Aufnahmeteil 10 in einen zylindrischen Abschnitt 32 des Aufnahmeteils 10 einführbar und durch diesen quer zu einer Längsachse 34 des Schafts 28 in einer in Fig. 3 dargestellten Verriegelungsstellung fixierbar.

In der Verriegelungsstellung ist der Schaft 28 in seinem dem Ende 26 des Kugelhalses 20 zugewandten Bereich ferner noch dadurch an dem Aufnahmeteil 10 fixierbar, daß auf gegenüberliegenden Seiten des Schafts 28 angeordnete, parallel zu einer vorzugsweise senkrecht zur Längsachse 34 verlaufenden Querrichtung 38 sich erstreckende Schrägflächen 36, welche sich in Richtung zum Endbereich 30 verjüngen, an entsprechend verlaufenden Schrägflächen 40 des Aufnahmeteils 10 zur Anlage kommen. Ferner schließen sich auf einer dem Endbereich 30 abgewandten Seite des Schrägflächen 36 noch Planflächen 42 an, welche sich parallel zur Längsachse 34 und parallel zur Querachse 38 erstrecken und ebenfalls an entsprechenden Planflächen 44 am Aufnahmeteil 10 zur Anlage bringbar sind, so daß durch die aneinander anliegenden Schrägflächen 36, 40 und durch die zusätzlichen Planflächen 42, 44 der Schaft 28 um die Längsachse 34 drehfest in dem Aufnahmeteil 10 in dem Verriegelungszustand fixierbar ist.

Dabei bilden die Schrägflächen 36, 40 einen Anschlag nur in einer parallel zur Längsachse 34 verlaufenden Einführrichtung 46 längs welcher der Schaft 28 in das Aufnahmeteil 10 einführbar ist, nicht jedoch in einer der Einführrichtung 46 entgegengesetzten Richtung.

Zusätzlich fixieren die Schrägflächen 36, 40 den Schaft 28 in dem Aufnahmeteil 10 im Bereich eines dem Ende 26 des Kugelhalses 20 zugewandten Endbereichs 48 des Aufnahmeteils 10 gegen eine Bewegung quer zur Längsachse 34.

Der in Fig. 1 dargestellte Kugelhals 20 erstreckt sich dabei in einer durch die Längsachse 34 des Schafts 28 hindurchverlaufenden Ebene 50, welche in Fig. 1 mit der Zeichenebene identisch ist. Vorzugsweise steht dabei die Querrichtung 38 senkrecht auf der Ebene 50 (Fig. 3), so daß sowohl die Schrägflächen 36 und die Planflächen 42 sowie die entsprechenden Schrägflächen 40 und die Planflächen 44 ebenfalls senkrecht zur Ebene 50 verlaufen.

Zur Fixierung des Schafts 28 in dem in Fig. 3 dargestellten Verriegelungszustand ist im Endbereich 30 des Schafts 28, und zwar in einer Wand 52 desselben, ein Führungskanal 54 angeordnet, in welchem eine als Verriegelungselement dienende Kugel 56 in einer Verriegelungsrichtung 58 beweglich geführt ist, wobei die Verriegelungsrichtung 58 parallel zu einer einen Mittelpunkt 60 der Kugel 56 schneidenden und mit einer Mittelachse des Führungskanals 54 zusammenfallenden Mittelachse 59 der Kugel 56 verläuft. Vorzugsweise verläuft dabei die Verriegelungsrichtung 58 radial zur Längsachse 34 und im rechten Winkel zu dieser.

Zum Bewegen der Kugel 56 in radialer Richtung zur Längsachse 34 ist in einer zur Längsrichtung 34 parallelen Zentralbohrung 62 des Schafts 28 ein Verriegelungsbolzen 64 vorgesehen, welcher in Richtung der Längsachse 34 bewegbar ist und mit einem konischen Abschnitt 66 die Kugel 56 im Verriegelungszustand beaufschlagt. Hierzu ist der Verriegelungsbolzen 64 seinerseits durch die Kraft einer Feder 68 beaufschlagt, welche den Verriegelungsbolzen 64 in Richtung eines Schaftendes 70 mit einer Kraft beaufschlagt, so daß der sich ebenfalls in Richtung des Schaftendes 70 verjüngende konische Abschnitt 66 die Kugel 56 radial zur Längsachse 34 nach außen drückt.

Hierbei greift die Kugel 56 im Verriegelungszustand in eine ebenfalls ein Verriegelungselement darstellende Kugelaufnahme oder Kugelpfanne 72 ein, welche axialsymmetrisch zu einer Symmetrieachse 74 ausgebildet ist, wobei allerdings die Symmetrieachse 74 im Abstand vom Mittelpunkt 60 der Kugel 56, und vorzugsweise im Abstand und parallel zur Verriegelungsrichtung 58 parallelen Mittelachse 59 der Kugel 56 verläuft. Dabei hat die Kugelaufnahme 72 einen Krümmungsradius, welcher größer als ein Radius der Kugel 56 ist, und ist relativ zu der im Verriegelungszustand stehenden Kugel 56 so angeordnet, daß die Kugel 56 ihrerseits einseitig einen dem Endbereich 48 des Aufnahmeteils zugewandten Flächenbereich 76 der Kugelaufnahme 72 beaufschlagt. Damit liegt der Flächenbereich 76 auf einer dem Endbereich 48 zugewandten Seite der Symmetrieachse 74 der Aufnahme 72.

Die Aufnahme 72 kann dabei die unterschiedlichsten Flächenformen aufweisen. Beispielsweise ist es denkbar, der Aufnahme 72 die Oberfläche einer Kugelkappe zu verleihen. Es ist aber auch denkbar, der Aufnahme 72 die Oberflächenform eines Kegelstumpfes oder eines Paraboloids zu geben.

Erfindungswesentlich ist lediglich, daß der Flächenbereich 76 derart schräg zur Verriegelungsrichtung 58 verläuft, daß die vom Verriegelungsbolzen 64 gegen diesen gedrückte Kugel 76 eine quer zur Verriegelungsrichtung 58 gerichtete Kraftkomponente 78 erzeugt, welche parallel zur Längsachse 34 verläuft und bewirkt, daß der Schaft 28 relativ zum Aufnahmeteil 10 in der Einführrichtung 46 mit dieser Kraftkomponente 78 beaufschlagt ist und somit die Schrägflächen 36 und 40 gegeneinander beaufschlagt werden und dabei spielfrei aneinander anliegen.

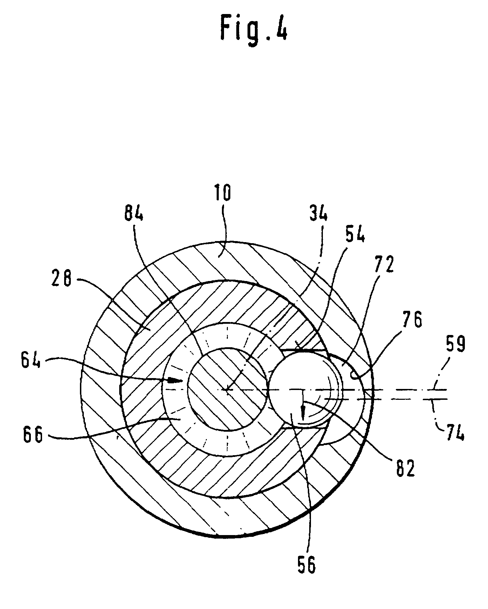

Darüber hinaus ist, wie in Fig. 4 dargestellt, eine Projektion der Symmetrieachse 74 auf eine senkrecht zur Längsachse 34 und durch die Verriegelungsrichtung 58 hindurch verlaufende Querebene 80 gegenüber der Mittelachse 59 der Kugel 56 parallelversetzt und verläuft somit nicht mehr radial zur Längsachse 34, so daß die auf den Flächenbereich 76 wirkende Kugel 56 nicht nur die Kraftkomponente 78 parallel zur Längsachse 34, sondern auch eine Kraftkomponente 82 erzeugt, welche azimuthal zur Längsachse 34 gerichtet ist und damit eine Verdrehung des Schafts 28 relativ zum Aufnahmeteil 10 bewirkt, die wiederum im Bereich der Schrägflächen 36 und 40 sowie der Planflächen 42 und 44 dazu führt, daß diese ebenfalls relativ zueinander verdreht werden und somit zwar nicht mehr flächig, allerdings spielfrei aneinander anliegen.

Bei dem erfindungsgemäßen Ausfuhrungsbeispiel ist, wie in Fig. 3 und 4 dargestellt, die Verriegelungsrichtung 58, in welcher die Kugel 56 bewegbar ist, so gewählt, daß diese parallel zur Querrichtung 38 und somit senkrecht zur Ebene 50 verläuft, in welcher sich der Kugelhals 20 erstreckt.

Damit wird erreicht, daß die das Verriegelungselement darstellende Kugel 56 bei Belastung der Kupplungskugel 24 außerhalb von von der Ebene 50 geschnittenen und hauptsächlich belasteten Flächenbereichen 83 des Schafts 28 bzw. des Aufnahmeteils 10 liegt.

Zur weiteren Sicherung des im Aufnahmeteil 10 in dem Verriegelungszustand fixierten Schafts 28 ist der Verriegelungsbolzen 64 im Anschluß an den konischen Abschnitt 66 mit einem zylindrischen Abschnitt 84 versehen, welcher einen derartigen Durchmesser aufweist, daß - wie in Fig. 4 dargestellt - bei an diesem anliegender Kugel 56 nach wie vor der Schaft 28 noch nicht aus dem Aufnahmeteil 10 entgegengesetzt zur Einführrichtung 46 herausgleiten kann. Dadurch ist sichergestellt, daß selbst dann, wenn durch übergroße Kräfte auf den Kugelhals 20 die Kugel 56 den konischen Abschnitt 66 des Führungsbolzens 64 derart stark beaufschlagen sollte, daß der Verriegelungsbolzen 64 entgegen der Kraftwirkung der Feder 68 sich vom Ende 70 des Schafts 28 wegbewegt, trotzdem ein selbständiges Lösen des Schafts 28 verhindert wird, da spätestens dann, wenn die Kugel 56 auf den zylindrischen Abschnitt 84 wirkt, die Kräfte der Kugel 56 entgegengesetzt zur Verriegelungsrichtung 58 keine weitere Verschiebung des Verriegelungsbolzens 64 entgegen der Kraft der Feder 68 bewirken können, und somit die an der Kugelaufnahme 72 anliegende Kugel 56 nach wie vor das Herausgleiten des Schafts 28 aus dem Aufnahmeteil 10 verhindert.

Erst dann, wenn - beispielsweise durch manuelle Betätigung eines Entriegelungshebels - der Verriegelungsbolzen 64 soweit entgegengesetzt zur Feder 68 bewegt ist, daß die Kugel 56 an einem konischen Endbereich 86 des Verriegelungsbolzens 64 anliegt, welcher auf den zylindrischen Abschnitt 84 folgt, ist die Kugel 56 entgegengesetzt zur Verriegelungsrichtung 58 so weit in den Schaft 28 hineinbewegbar, daß die Kugel 56 vollkommen aus der Kugelaufnahme 72 herausgleiten kann.

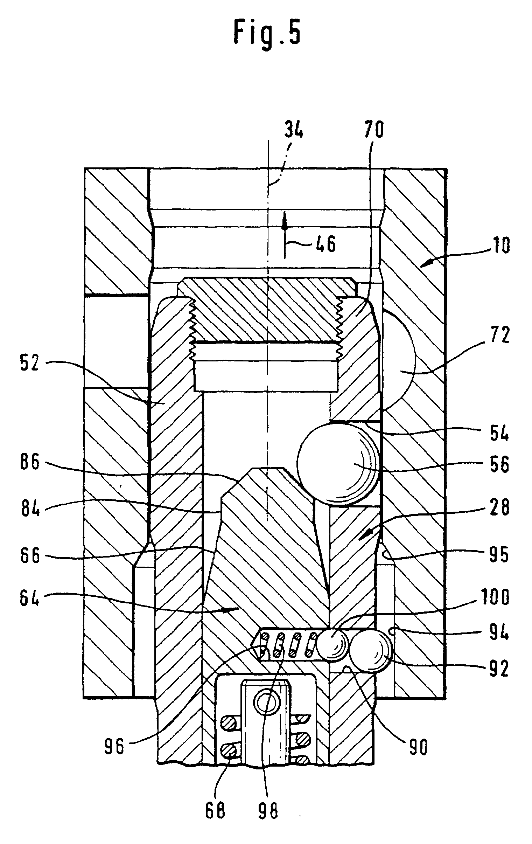

Um den Verriegelungsbolzen 64 in der Entriegelungsstellung, dargestellt in Fig. 5, zu fixieren, ist in der Wand 52 des Schafts 28, und zwar zwischen dem Führungskanal 54 und deren Schrägflächen 36 ein weiterer Führungskanal 90 mit einer in diesem geführten als Tastelement wirkenden Auslösekugel 92 vorgesehen, welche aufgrund einer sich an den zylindrischen Abschnitt 32 des Aufnahmeteils in Richtung des Schrägfläche 40 anschließenden zurückspringenden Freisparung 94 die Möglichkeit hat, radial bezüglich der Längsachse 34 soweit nach außen auszuweichen, daß eine in einem Querkanal 96 des Verriegelungsbolzens 44 angeordnete und durch eine Feder 98 beaufschlagte und als Sperrelement wirkende Kugel 100 soweit in den Führungskanal 90 eingreift, daß diese eine weitere Bewegung des Verriegelungsbolzens 64 in Richtung des Endes 70 des Schafts 28 blockiert, wie in Fig. 5 dargestellt, wobei die Kugel 92 dabei an der Freisparung 94 anliegt. Wird der Schaft 28 in der Einführrichtung 46 in das Aufnahmeteil 10 hineingeschoben, so bewirkt der beim Übergang von der Freisparung 94 zum zylindrischen Abschnitt 32 entstehende Vorsprung 95, daß die Kugel 92 radial in Richtung der Längsachse 34 und auf diese zu verschoben wird, damit die Kugel 100 soweit ebenfalls in Richtung der Längsachse 34 bewegt, daß diese nicht mehr durch Eingreifen in den Führungskanal 90 sperrt und somit der Verriegelungsbolzen 64 die Möglichkeit hat, sich unter Kraftwirkung der Feder 68 in Richtung des Endes 70 zu bewegen und die als Verriegelungselement wirkende Kugel 56 in der Verriegelungsrichtung 58 zu beaufschlagen, so daß diese mit der Kugelaufnahme 72 in Eingriff kommen kann.

Vorzugsweise liegt der Übergang von der Freisparung 94 zum zylindrischen Abschnitt 32 so, daß die Kugel 92 dann die Kugel 100 aus ihrer sperrenden Stellung radial zur Längsachse 34 nach innen schiebt, wenn die Kugel 56 bereits soweit in Einschieberichtung 46 eingeschoben ist, daß diese in die Kugelaufnahme 72 eingreifen kann, wobei gleichzeitig die Schrägflächen 36 und 40 im wesentlichen aneinander anliegen.

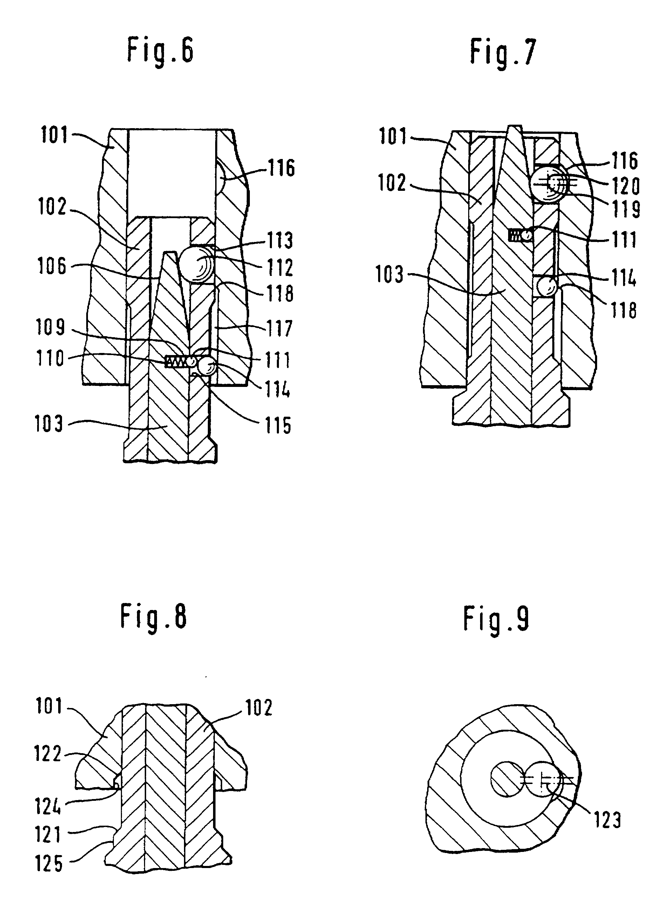

Ein zweites Ausführungsbeispiel, dargestellt in den Fig. 6 bis 9 umfaßt eine zweite Variante der erfindungsgemäßen Lösung.

Wie in den Fig. 6 bis 9 dargestellt, umfaßt das zweite Ausführungsbeispiel der erfindungsgemäßen Anhängevorrichtung im wesentlichen ein Aufnahmeteil 101 und einen Kugelhals 102.

Das Aufnahmeteil 101 ist am Heck eines Kraftwagens befestigt und ist nach unten offen. Von unten her ist in das Aufnahmeteil 101 ein Verankerungsteils des Kugelhalses 102 eingesetzt, das mit der Kupplungskugel versehen ist.

Wie in Fig. 6 dargestellt, ist innerhalb des Verriegelungsteils des Kugelhalses 102 ein Verriegelungsbolzen 103 angeordnet, der durch eine Feder nach oben gedrückt wird und über Zugelemente betätigt werden kann. Das obere Ende des Verriegelungsbolzens 103 ist mit einem konischen Bereich 106 ausgestattet. Unterhalb des konischen Bereichs 106 ist im Verriegelungsbolzen 103 eine Querbohrung 109 angeordnet, in der eine durch eine Druckfeder 110 belastete Kugel 111 liegt. An dem konischen Bereich 106 des Verriegelungsbolzens 103 liegt eine Kugel 112 an, die in der Querbohrung 113 angeordnet ist. Die Kugel 111 hat Verbindung mit einer Kugel 114 in einer Querbohrung 115.

Wie in Fig. 4 dargestellt, wird eine zusätzliche Verspannung des Kugelhalses 102 im Aufnahmeteil 101 dadurch erreicht, daß die Mitte der Kugel 112 in Fahrzeuglängsrichtung gesehen außerhalb der Querachse des Aufnahmeteils 101 liegt. Das Aufnahmeteil 101 ist für die Kugel 112 mit einer Kugelpfanne 116 und für die Kugel 114 mit einer Freisparung 117 versehen. Während die Kugel 112 als Verriegelungsglied dient, sind die Kugeln 111 bzw. 114 als Auslöseglieder vorgesehen.

Beim Einsetzen des Kugelhalses 102 in das Aufnahmeteil 101 wird die Kugel 114 beim Anstoßen an die Schrägfläche 118 der Freisparung 117 in die Querbohrung 115 gedrückt, so daß auch die Kugel 111 in die Querbohrung 109 gedrückt wird. Dadurch kann der Verriegelungsbolzen 103 über seinen konischen Bereich 106 die Kugel 112 in die Kugelpfanne 116 drücken. In diesem Zustand ist, wie aus Fig. 7 hervorgeht, der Kugelhals 102 mit dem Aufnahmeteil 101 fest verbunden.

Um eine sichere Verspannung des Kugelhalses im Aufnahmeteil 101 zu erzielen, ist die Kugelmitte 119 der Kugel 112 außermittig zur Mitte der Kugelpfanne 116. Die Kugeln 112 bzw. 114 sind gegen Herausfallen aus dem Kugelhals zum Beispiel durch Verstemmen der betreffenden Bohrungen gesichert.

Die Verriegelung wird dadurch aufgehoben, daß der Verriegelungsbolzen 103 nach unten gezogen wird, so daß alle Teile die aus Fig. 6 ersichtliche Stellung einnehmen. Die Kugel 111, die an der Kugel 114 anliegt hält den Verriegelungsbolzen fest. Der Kugelhals 102 kann entfernt werden.

Aus Fig. 8 ist ersichtlich, daß der Kugelhals 102 mit Schrägflächen 121 und mit parallel zur Mittellängsachse angeordneten Flächen 125 an entsprechenden Schrägflächen 122 und mit parallel zur Mittellängsachse angeordneten Schrägflächen 124 am Aufnahmeteil anliegt, so daß ein Verdrehen des Kugelhalses beim Einsetzen nicht moglich ist.

## Patentansprüche

1. Anhängevorrichtung für Fahrzeuge, insbesondere für Personenkraftwagen, umfassend ein am Heck des Fahrzeugs fest angeordnetes Aufnahmeteil (10), einen mit einem Verankerungsteil (28) lösbar am Aufnahmeteil (10) fixierbaren Kugelhals (20), welcher an einem dem Verankerungsteil (28) gegenüberliegenden Ende eine Kupplungskugel (24) trägt, am Aufnahmeteil (10) und am Verankerungsteil (28) angeordnete, quer zu einer Einführrichtung wirksame und in der Einführrichtung wirksame Formschlußelemente (36, 40, 42, 44; 121, 122, 124, 125), durch welche das Verankerungsteil (28) zum Fixieren desselben in einer definierten Relativposition zum Aufnahmeteil (10) positionierbar ist, und am Aufnahmeteil (10) und am Verankerungsteil (28) angeordnete Verriegelungselemente (56), von denen eines ein in einer quer zur Einführrichtung verlaufenden Verriegelungsrichtung (58) bewegbarer Verriegelungskörper (64; 72) aufweist, der im Verriegelungszustand in Verriegelungsrichtung (58) mit einer elastischen Kraft beaufschlagt ist und das andere ein Gegenlager (72, 116) für diesen ist welches eine schräg zur Verriegelungsrichtung (58) verlaufende Fläche aufweist, auf welcher im Verriegelungszustand der mit der elastischen Kraft beaufschlagte Verriegelungskörper (64) einseitig anliegt, so daß die Verriegelungselemente (56) eine quer zur Verriegelungsrichtung (58) weisende Kraftkomponente erzeugen, und welche bei in der definierten Relativposition stehendem Verankerungsteil (28) eine Bewegung desselben entgegengesetzt zur Einführrichtung aus dem Aufnahmeteil (10) heraus blockieren,
**dadurch gekennzeichnet, daß** die schräg zur Verriegelungsrichtung (58) verlaufende Fläche des Gegenlagers (72; 116) so verläuft, daß die quer zur Verriegelungsrichtung (58) weisende Kraftkomponente (82) quer zur Einführrichtung (46) weist und damit die Formschlußelemente (36, 40, 42, 44; 121, 122, 125, 124) spielfrei in Anlage hält.

2. Anhängevorrichtung nach Anspruch 1, **dadurch gekennzeichnet, daß** die quer zur Einführrichtung (46) weisende Kraftkomponente (82) bezüglich einer Längsachse (34) des Verankerungsteils (28) ein Drehmoment erzeugt.

3. Anhängevorrichtung nach Anspruch 1 oder 2, **dadurch gekennzeichnet, daß** die Formschlußelemente als eine eine Drehung des Verankerungsteils (28; 102) im Aufnahmeteil (10; 101) verhindernde Formschlußelemente (36, 40, 42, 44; 121, 122, 125, 124) ausgebildet sind.

4. Anhängevorrichtung nach einem der voranstehenden Ansprüche, **dadurch gekennzeichnet, daß** die Formschlußelemente als sich quer zur Einführrichtung (46) erstreckende Flächen (36, 40; 121, 124) ausgebildet sind.

5. Anhängevorrichtung nach einem der voranstehenden Ansprüche, **dadurch gekennzeichnet, daß** die quer zur Verriegelungsrichtung (58) weisende Kraftkomponente (78) in Einführrichtung (46) weist.

6. Anhängevorrichtung nach einem der voranstehenden Ansprüche, **dadurch gekennzeichnet, daß** das Gegenlager eine Aufnahme (72; 116) für das Verriegelungselement (56; 112) ist.

7. Anhängevorrichtung nach Anspruch 6, **dadurch gekennzeichnet, daß** die Aufnahme eine zu einer Mittelachse (74; 120) derselben symmetrische Aufnahmefläche (72; 116) aufweist, an welcher der Verriegelungskörper (56; 112) nur in einem auf einer Seite der Mittelachse (74; 120) liegenden Flächenbereich (76) anliegt.

8. Anhängevorrichtung nach Anspruch 7, **dadurch gekennzeichnet, daß** im Verriegelungszustand eine parallel zur Verriegelungsrichtung (58) verlaufende Mittelachse (59; 119) des Verriegelungskörpers (56; 112) seitlich neben der Mittelachse (74; 120) der Aufnahme (72; 116) verläuft.

9. Anhängevorrichtung nach einem der Ansprüche 7 oder 8, **dadurch gekennzeichnet, daß** die Aufnahmefläche (72; 116) rotationssymmetrisch zur Mittelachse (74) der Aufnahme verläuft.

10. Anhängevorrichtung nach einem der voranstehenden Ansprüche, **dadurch gekennzeichnet, daß** der Verriegelungskörper eine Kugel (56; 112) ist.

11. Anhängevorrichtung nach Anspruch 10, **dadurch gekennzeichnet, daß** im Verriegelungszustand ein Mittelpunkt (76) der Kugel (56; 112) neben der Mittelachse (74; 120) der Aufnahme (72; 116) liegt.

12. Anhängevorrichtung nach einem der voranstehenden Ansprüche, **dadurch gekennzeichnet, daß** der Verriegelungskörper (56; 112) durch einen in dem Verankerungsteil (28; 102) verlaufenden federbeaufschlagten Verriegelungsbolzen (64; 103) mit der elastischen Kraft beaufschlagt ist.

13. Anhängevorrichtung nach Anspruch 12, **dadurch gekennzeichnet, daß** im Verriegelungszustand der Verriegelungsbolzen (64; 103) mit einem konischen Abschnitt (66; 106) auf den Verriegelungskörper (56; 112) wirkt.

14. Anhängevorrichtung nach Anspruch 13, **dadurch gekennzeichnet, daß** sich an den konischen Abschnitt (66) des Verriegelungsbolzens (64) ein zylindrischer Abschnitt (84) anschließt, welcher so dimensioniert ist, daß bei Anlage an diesem der Verriegelungskörper (56) noch mit dem Gegenlager in Eingriff ist.

15. Anhängevorrichtung nach einem der voranstehenden Ansprüche, **dadurch gekennzeichnet, daß** eine Auslösevorrichtung (92, 100; 114, 111) eine Wirkung der federelastischen Kraft auf das Verriegelungselement (56; 112) in einer Entriegelungsstellung blockiert und die Wirkung der elastischen Kraft dann freigibt, wenn die Formschlußelemente (36, 40, 42, 44; 121, 122, 125, 126) im wesentlichen aneinander anliegen.

16. Anhängevorrichtung nach Anspruch 15, **dadurch gekennzeichnet, daß** die Auslösevorrichtung ein Sperrelement (100; 111) aufweist, welches über einen Vorsprung (95; 118) im Aufnahmeteil (10; 101) betätigbar ist.

17. Anhängevorrichtung nach Anspruch 16, **dadurch gekennzeichnet, daß** das Sperrelement (100; 111) über ein den Vorsprung (95; 118) abtastendes Tastelement (92; 114) betätigbar ist.

18. Anhängevorrichtung nach einem der Ansprüche 15 bis 17, **dadurch gekennzeichnet, daß** die Auslösevorrichtung (92, 100; 114, 111) auf den Verriegelungsbolzen (64; 103) wirkt.

## Claims

1. A tow bar for vehicles, particularly passenger vehicles, comprising a receiving member (10) fixed to the rear of the vehicle, a ball neck (20) which can be fixed detachably to the receiving member (10) by an anchoring member (28) and which carries a coupling ball (24) at an end opposite the anchoring member (28), positively engaging members (36, 40, 42, 44; 121, 122, 124, 125) arranged on the receiving member (10) and anchoring member (28) and acting transversely to and in the insertion direction, whereby the anchoring member (28) can be positioned to fix it in a defined position relative to the receiving member (10), and locking elements (56) arranged on the receiving member (10) and anchoring member (28), one of the locking elements having a locking member (64; 72) which is movable in a locking direction (58) extending transversely of the insertion direction and to which a resilient force is applied in the locking direction (58) in the locked condition, and the other locking element being an opposing bearing (72, 116) for the first locking element and having a surface inclined to the locking direction (58), which surface, in the locked condition, is engaged at one side by the locking member (64) acted on by the resilient force, so that the locking elements (56) produce a force component directed transversely of the locking direction (58), the locking elements blocking movement of the anchoring member (28) out of the receiving member (10) in the direction opposite the insertion direction when the anchoring member (28) is in the defined relative position, **characterised in that** the surface of the opposing bearing (72; 116) inclined to the locking direction (58) extends so that the force component (82) extending transversely of the locking direction (58) is directed transversely of the insertion direction (46) and thus keeps the positively engaging members (36, 40, 42, 44; 121, 122, 125, 124) in contact without any play.

2. The tow bar of claim 1, **characterised in that** the force component (82) directed transversely of the insertion direction (46) produces a torque relative to a longitudinal axis (34) of the anchoring member (28).

3. The tow bar of claim 1 or 2, **characterised in that** the positively engaging members are positively engaging members (36, 40, 42, 44; 121, 122, 125, 124) which prevent rotation of the anchoring member (28; 102) in the receiving member (10; 101).

4. The tow bar of any of the preceding claims, **characterised in that** the positively engaging members are surfaces (36, 40; 121, 124) extending transversely of the insertion direction (46).

5. The tow bar of any of the preceding claims, **characterised in that** the force component (78) directed transversely of the locking direction (58) is directed in the insertion direction (46).

6. The tow bar of any of the preceding claims, **characterised in that** the opposing bearing is a receiver (72; 116) for the locking element (56; 112).

7. The tow bar of claim 6, **characterised in that** the receiver has a receiving surface (72; 116) symmetrical with its central axis (74; 120), with which the locking member (56; 112) is in contact only in a surface area (76) at one side of the central axis (74; 120).

8. The tow bar of claim 7, **characterised in that** in the locked condition a central axis (59; 119) of the locking member (56; 112) extending parallel with the locking direction (58) extends laterally adjacent the central axis (74; 120) of the receiver (72; 116).

9. The tow bar of claim 7 or 8, **characterised in that** the receiving surface (72; 116) is symmetrical in rotation with the central axis (74) of the receiver.

10. The tow bar of any of the preceding claims, **characterised in that** the locking member is a ball (56; 112).

11. The tow bar of claim 10, **characterised in that** in the locked condition a centre (76) of the ball (56; 112) is adjacent the central axis (74; 120) of the receiver (72; 116).

12. The tow bar of any of the preceding claims, **characterised in that** the resilient force is applied to the locking member (56; 112) by a spring-loaded locking bolt (64; 103) extending in the anchoring member (28; 102).

13. The tow bar of claim 12, **characterised in that** in the locked condition a conical section (66; 106) of the locking bolt (64; 103) acts on the locking member (56; 112).

14. The tow bar of claim 13, **characterised in that** the conical section (66) of the locking bolt (64) is adjoined by a cylindrical section (84), which is dimensioned so that the locking member (56) is still in engagement with the opposing bearing when it lies against the cylindrical section.

15. The tow bar of any of the preceding claims, **characterised in that** a release means (92, 100; 114, 111) blocks any action of the resilient spring force on the locking element (56; 112) in an unlocked position and enables the action of the resilient force when the positively engaging members (36, 40, 42, 44; 121, 122, 125, 126) are substantially in contact with each other.

16. The tow bar of claim 15, **characterised in that** the release means has a blocking element (100; 111) which can be actuated by a projection (95; 118) in the receiving member (10; 101).

17. The tow bar of claim 16, **characterised in that** the blocking element (100; 111) can be actuated by a sensing member (92; 114) sensing the projection (95; 118).

18. The tow bar of any of claims 15 to 17, **characterised in that** the release means (92, 100; 114, 111) acts on the locking bolt (64; 103).

## Revendications

1. Dispositif d'attelage pour des véhicules automobiles, en particulier pour des voitures de tourisme, comprenant une pièce de logement (10) disposée fixement à l'arrière du véhicule automobile, une gorge (20) de boule d'attelage pouvant être fixée sur la pièce de logement (10), de façon amovible avec une pièce d'ancrage (28), laquelle gorge de boule d'attelage supporte une boule d'attelage (24) au niveau d'une extrémité opposée à la pièce d'ancrage (28), des éléments de liaison par sûreté de forme (36, 40, 42, 44 ; 121, 122, 124, 125) actifs transsersalement par rapport à une direction d'introduction et actifs dans la direction d'introduction et disposés sur la pièce de logement (10) et sur la pièce d'ancrage (28), éléments de liaison par sûreté de forme au moyen desquels la pièce d'ancrage (28) est positionnable pour sa propre fixation dans une position relative définie par rapport à la pièce de logement (10), et des éléments de verrouillage (56) disposés sur la pièce de logement (10) et sur la pièce d'ancrage (28), éléments de verrouillage dont l'un des deux comprend un corps de verrouillage (64 ; 72) mobile dans une direction de verrouillage (58) s'étendant transversalement par rapport à la direction d'introduction, lequel corps de verrouillage, en position de verrouillage, est sollicité par une force élastique dans la direction de verrouillage (58), l'autre élément de verrouillage étant un palier d'appui (72, 116) pour ce corps de verrouillage, lequel palier d'appui comprend une surface s'étendant de façon inclinée par rapport à la direction de verrouillage (58), surface sur laquelle, en position de verrouillage, le corps de verrouillage (64) sollicité par la force élastique est en appui sur un seul côté, de sorte que les éléments de verrouillage (56) produisent une composante de force pointant transversalement par rapport à la direction de verrouillage (58), et qui, lorsque la pièce d'ancrage (28) est dans la position relative définie, bloquent un déplacement de cette pièce d'ancrage, opposé à la direction d'introduction, pour l'empêcher de sortir de la pièce de logement (10),
**caractérisé en ce que** la surface du palier d'appui (72 ; 116) s'étendant de façon inclinée par rapport à la direction de verrouillage (58) s'étend de façon telle, que la composante de force (82) pointant transversalement par rapport à la direction de verrouillage (58) pointe transversalement par rapport à la direction d'introduction (46) et, ainsi, maintient en appui, sans jeu, les éléments de liaison par sûreté de forme (36, 40, 42, 44 ; 121, 122, 125, 124).

2. Dispositif d'attelage selon la revendication 1, **caractérisé en ce que** la composante de force (82) pointant transversalement par rapport à la direction d'introduction (46) produit un couple de rotation par rapport à un axe longitudinal (34) de la pièce d'ancrage (28).

3. Dispositif d'attelage selon la revendication 1 ou 2, **caractérisé en ce que** les éléments de liaison par sûreté de forme sont configurés comme des éléments de liaison par sûreté de forme (36, 40, 42, 44 ; 121, 122, 125, 124) empêchant une rotation de la pièce d'ancrage (28 ; 102) dans la pièce de logement (10 ; 101).

4. Dispositif d'attelage selon l'une quelconque des revendications précédentes, **caractérisé en ce que** les éléments de liaison par sûreté de forme sont configurés comme des surfaces (36, 40 ; 121, 124) s'étendant transversalement par rapport à la direction d'introduction (46).

5. Dispositif d'attelage selon l'une quelconque des revendications précédentes, **caractérisé en ce que** la composante de force (78) pointant transversalement par rapport à la direction de verrouillage (58) pointe dans la direction d'introduction (46).

6. Dispositif d'attelage selon l'une quelconque des revendications précédentes, **caractérisé en ce que** le palier d'appui est un logement (72 ; 116) pour l'élément de verrouillage (56 ; 112).

7. Dispositif d'attelage selon la revendication 6, **caractérisé en ce que** le logement comprend une surface de logement (72 ; 116) symétrique par rapport à un axe central (74 ; 120) de ce même logement, surface de logement sur laquelle le corps de verrouillage (56 ; 112) est en appui seulement dans une zone de surface (76) se trouvant sur un côté de l'axe central (74 ; 120).

8. Dispositif d'attelage selon la revendication 7, **caractérisé en ce que**, en position de verrouillage, un axe central (59 ; 119) du corps de verrouillage (56 ; 112), s'étendant parallèlement à la direction de verrouillage (58), s'étend latéralement à proximité de l'axe central (74 ; 120) du logement (72 ; 116).

9. Dispositif d'attelage selon la revendication 7 ou 8, **caractérisé en ce que** la surface de logement (72 ; 116) s'étend à symétrie de rotation par rapport à l'axe central (74) du logement.

10. Dispositif d'attelage selon l'une quelconque des revendications précédentes, **caractérisé en ce que** le corps de verrouillage est une boule (56 ; 112).

11. Dispositif d'attelage selon la revendication 10, **caractérisé en ce que**, en position de verrouillage, un point milieu (76) de la boule (56 ; 112) se trouve à côté de l'axe central (74 ; 120) du logement (72 ; 116).

12. Dispositif d'attelage selon l'une quelconque des revendications précédentes, **caractérisé en ce que** le corps de verrouillage (56 ; 112) est sollicité par la force élastique qui est appliquée d'un boulon de verrouillage (64 ; 1 103) actionné par un ressort et s'étendant dans la pièce d'ancrage (26 ; 102).

13. Dispositif d'attelage selon la revendication 12, **caractérisé en ce que**, en position de verrouillage, le boulon de verrouillage (64 ; 103) agit sur le corps de verrouillage (56 ; 112) avec une partie conique (66 ; 106).

14. Dispositif d'attelage selon la revendication 13, **caractérisé en ce qu'**une partie cylindrique (84) fait suite à la partie conique (66) du boulon de verrouillage (64), laquelle partie cylindrique est dimensionnée de façon telle, que lorsque le corps de verrouillage (56) est en appui sur cette partie cylindrique, il est encore en prise avec le palier d'appui.

15. Dispositif d'attelage selon l'une quelconque des revendications précédentes, **caractérisé en ce qu'**un dispositif de déclenchement (92, 100 ; 114, 111) bloque, en position de déverrouillage, l'effet de la force élastique du ressort s'exerçant sur l'élément de verrouillage (56 ; 112) et libère alors l'effet de la force élastique lorsque les éléments de liaison par sûreté de forme (36, 40, 42, 44 ; 121, 122, 125, 126) sont pratiquement en appui les uns contre les autres.

16. Dispositif d'attelage selon la revendication 15, **caractérisé en ce que** le dispositif de déclenchement comprend un élément de blocage (100 ; 111) qui peut être actionné dans la pièce de logement (10 ; 101), par une partie saillante (95 ; 118).

17. Dispositif d'attelage selon la revendication 16, **caractérisé en ce que** l'élément de blocage (100 ; 111) peut être actionné par un élément analyseur (92 ; 114) analysant la partie saillante (95 ; 118).

18. Dispositif d'attelage selon l'une quelconque des revendications 15 à 17, **caractérisé en ce que** le dispositif de déclenchement (92, 100 ; 114, 111) agit sur le boulon de verrouillage (64 ; 103).
